# EUROPÄISCHE PATENTSCHRIFT

(11) **EP 0 515 657 B1**
(45) Veröffentlichungstag und Bekanntmachung des Hinweises auf die Patenterteilung: **30.11.1994**
(21) Anmeldenummer: 92902355.4
(22) Anmeldetag: 19.12.1991
(51) Int. Cl.: F16C 17/10

(54) **ZUSAMMENGESETZTES RADIAL-AXIAL-GLEITLAGER UND VERFAHREN ZU SEINER HERSTELLUNG**
COMBINED RADIAL/AXIAL FRICTION BEARING AND METHOD OF MANUFACTURING IT
PALIER LISSE RADIAL-AXIAL COMPOSE ET PROCEDE POUR SA FABRICATION

(30) Priorität: 22.12.1990 DE 4041556; 06.12.1991 DE 4140277
(43) Veröffentlichungstag der Anmeldung: 02.12.1992
(73) Patentinhaber: GLYCO-METALL-WERKE Glyco B.V. & Co. KG, 65201 Wiesbaden (DE)
(72) Erfinder: BRANDT, Horst, D-6108 Weiterstadt (DE)
(86) Internationale Anmeldenummer: DE9101011
(87) Internationale Veröffentlichungsnummer: WO9211468

(56) Entgegenhaltungen:
- EP-A- 0 298 953
- DE-A- 2 412 870
- FR-A- 2 108 522
- GB-A- 2 134 189
- GB-A- 2 210 113

## Beschreibung

Die Erfindung betrifft ein zusammengesetzes Radial-Axial-Gleitlager mit halbschalenförmigem oder buchsenförmigem Radiallagerteil und einseitig oder beidseitig angesetztem teilringförmigem Axiallagerteil oder Satz von teilringförmigen Axiallagerteilen, wobei jedes Axiallagerteil eine Mehrzahl von in gegenseitigen Winkelabständen nach innen vorstehenden Haltelaschen an seiner Umfangskante aufweist, die in eine im Bereich des bogenförmigen oder kreisförmigen Randes des Radiallagerteiles eingebrachte Ausnehmung eingesetzt sind, wobei sämtliche Haltelaschen in der sie jeweils aufnehmenden Aufnehmung Spiel in Umfangsrichtung und Spiel in Axialrichtung des Radiallagerteiles haben.

Die Erfindung betrifft ferner Verfahren zur Herstellung solcher zusammengesetzter Radial-Axial-Gleitlager.

Die zusammengesetzten Radial-Axial-Gleitlager sind aus einer Vielzahl von Vorveröffentlichungen bekannt. Sie haben gegenüber einem einstückig ausgebildeten Radial-Axial-Gleitlager (Bundlager) den Vorteil, daß für das Radiallagerteil ein anderer Werkstoff als für das Axiallagerteil gewählt werden kann und so eine optimale Werkstoffanpassung an die jeweiligen Belastungsverhältnisse möglich ist.

Um den Verschleiß der Lagerteile bei Radial-Axial-Gleitlager gering zu halten, ist die Zentrierung und Fixierung der Lagerteile zueinander von großer Bedeutung, wobei eine gewisse Beweglichkeit des Axiallagerteiles gegenüber dem Radiallagerteil allein schon zur Montage des Gleitlagers erwünscht ist.

Aus DE-A-2 638 996 sind geteilte Radial-Axial-Gleitlager bekannt, bei denen die Axiallagerteile Nasen als Haltelaschen aufweisen, die in Richtung der Lagerachse umgebogen werden müssen und in entsprechende zum Außenumfang offene Ausbuchtungen des Radiallagerteiles eingreifen. Da sich die umgebogenen Haltelaschen an der Lagerbohrung des Lagergehäuses abstützen sollen, müssen diese Haltelaschen mit hoher Präzision umgebogen werden. Die in Umfangsrichtung große Ausdehnung dieser Haltelaschen erfordert ferner einen aufwendigen Biegevorgang. Schließlich bietet die Ausgestaltung der Ausbuchtungen nicht die erforderliche sichere Fixierung der Lagerteile in axialer Richtung.

Aus EP-A-0 298 953 ist ein aus Lagerhalbschale und gesondertem Auslaufbund zusammengesetztes Radial-Axial-Gleitlager bekannt, bei welchem zur Befestigung des Anlaufbundes an der Lagerhalbschale diese mit zum Außenrand hin offenen Einsteckausnehmungen versehen ist, die eine in axialer Richtung wirksame Hinterschneidung in Form eines Schwalbenschwanzes bilden. Entsprechend diesen Einsteckausnehmungen sind am Anlaufbund Befestigungsansätze vorgesehen, die aus in axialer Richtung abgewinkelten Zungen bestehen. Es müssen daher auch bei den aus EP 298 953 bekannten Radial-Axial-Gleitlagern die Haltelaschen sehr lang sein und mit hoher Präzision umgebogen werden. Um den Anlaufbund mit der Lagerschale zu verbinden, wird der Anlaufbund in radialer Richtung auf die Lagerhalbschale aufgesteckt. Sofern sämtliche Befestigungsansätze den Einstückausnehmungen entsprechende Schwalbenschwanzform aufweisen, ist es notwendig, die Lagerhalbschale zusammenzudrücken, um die Befestigungsansätze in die Einsteckausnehmungen einzuführen. Durch dieses Zusammendrücken wird nicht nur die Spreizung der Lagerhalbschale aufgehoben, sondern darüber hinaus noch die Lagerhalbschale zusätzlich deformiert. Hierbei kann es zu einer Beschädigung der Lagerhalbschale kommen. Sofern nur die äußeren Befestigungsansätze Schwalbenschwanzform aufweisen und sich unter Ausnutzung des zwischen Radiallagerteil und Anlaufbund gewünschten Spiels in die für sie vorgesehenen Einsteckausnehmungen einführen lassen, muß ein mittlerer Befestigungseinsatz zunächst rechteckig ausgebildet und nach dem Ansetzen des Anlaufbundes an die Lagerhalbschale in Schwalbenschwanzform aufgeweitet werden. Dieses Aufweiten in Schwalbenschwanzform ist bei den umgebogenen Befestigungansätzen schwierig und bringt die Gefahr von Beschädigung am Radiallagerteil mit sich. Außerdem bieten die in Schwalbenschwanzform gebogenen Teile eines Befestigungsansatzes nur bedingte Festigkeit und Haltesicherheit und sind für die bei diesen bekannten Radial-Axial-Gleitlagern an den Haltelaschen erforderliche Präzision schädlich.

Aus DE-A-3 345 652 und der gattungsbildenden DE-A-2 412 870 sind geflanschte Halblager zur Verwendung in Motoren bekannt. Die Verbindung zwischen der halbzylindrischen Lagerschale und dem Bunde erfolgt durch das Einschieben von radial vorstehenden, einwärts ragenden, im wesentlichen rechteckigen Vorsprüngen in entsprechend profilierte zum Außenrand hin offene Ausbuchtungen des Radiallagerteiles. Die äußeren freien Ecken werden dann verformt und bilden Anschläge, die die Flansche an der Lager Schale fixieren, wobei die Vorsprünge Spiel in Umfangsrichtung und Spiel in Axialrichtung in den Ausbuchtungen haben.

Die Ausbuchtungen befinden sich an den bogenförmigen Rändern der Schale. Hierbei müssen bestimmte Winkelpositionen der Ausbuchtungen und der radial vorstehenden Ansätze beachtet werden. Nachteilig bei dieser Art der Verbindung ist die aufwendige Herstellung, da bei der Ausbildung und Anordnung der Prismen und der Ausbuchtungen außer den Winkelpositionen auch noch enge Toleranzen eingehalten werden müssen. Die Prismen sind zudem noch abgesetzt geprägt oder gefräßt. Beim Zusammenbau muß ebenfalls das Radiallagerteil über das normale Maß hinaus deformiert werden. Wenn nach dem Einbau des geflanschten Halblagers die Spreizung der Lagerschale aufgehoben ist, sind die Axiallagerteile nicht mehr fixiert und können eventuell von der Lagerschale abfallen.

Aus GB-A-2 210 113 ist ein kombiniertes Radial-Axial-Gleitlager bekannt, bei dem das Axiallagerteil radial nach innen vorstehende Befestigungslaschen aufweist, die eine rechtwinklige Gestalt haben, die in in axialer Richtung hinterschnittene Ausnehmungen des Radiallagerteiles eingreifen. Der Fertigungsaufwand ist hierbei sehr groß, da hinterschnittene Nuten in die Lagerschale eingebracht werden müssen.

Schließlich ist aus DE-C-2 140 845 ein zusammengesetztes Radial-Axial-Gleitlager bekannt, bei welchem das Axiallagerteil radial einwärts gerichtete, abgeschrägte Haltelaschen aufweist, die in entsprechende axial offene Ausnehmungen am Umfangsrand des Radiallagerteiles eingreifen. Um das an das Radiallagerteil angesetzte Axiallagerteil zu halten, sind an den Ausnehmungen des Radiallagerteiles kleine Anschläge angebracht, die über die Abschrägung der Haltelaschen greifen sollen. Abgsehen davon, daß solche Anschläge in den Ausnehmungen des Radiallagerteiles hohe Präzision erfordern und damit hohe Herstellungskosten verursachen, wird auf diese Weise nicht die erforderliche Sicherheit für den Halt des Axiallagerteiles am Radiallagerteil erreicht.

Es ist daher Aufgabe der Erfindung ein zusammengesetztes Radial-Axial-Gleitlagerteil so wie ein Verfahren zu dessen Herstellung bereitzustellen, mit welchem sichere Fixierung des Axiallagerteiles am Radiallagerteil gewährleistet wird und dabei nur wenige Arbeitsschritte erforderlich sind und damit kostengünstige Fertigung erreicht wird.

Diese Aufgabe wird mit einem zusammengesetzten Radial-Axial-Gleitlager gelöst, bei welchem für jedes Axiallagerteil mindestens eine Ausnehmung am Umfangsrand des Radiallagerteiles für eine als Befestigungslasche dienende Haltelasche in Form einer geschlossenen Halteöffnung gebildet ist, durch die die jeweilige Befestigungslasche des Axiallagerteiles gesteckt ist und das Radiallagerteil übergreifende, angeformte Nasen aufweist, wobei die Nasen einen ein vorher festgelegtes radiales Spiel des Axiallagerteiles gegenüber dem Radiallagerteil bildendenden Abstand von dem von ihnen übergriffenen Innenflächenteil des Radiallagerteiles haben.

Auf Seite 176 des Buches "Feinmechanische Bauelemente" von S. Hildebrand, Hansen Verlag, München, Wien 1978 sind zwar Vernietungen von Zapfen mit rechteckigem Querschnitt gezeigt. Mit diesen bekannten Vernietungen lassen sich aber nur feste Verbindungen, nicht aber begrenzt bewegliche Verbindungen herstellen.

Durch die Ausbildung der die Befestigungslasche aufnehmenden Ausnehmung als geschlossene Halteöffnung wird der Vorteil größerer Stabilität des Radiallagerteiles und erheblich verbesserter Stabilität der Verbindung zwischen dem Radiallagerteil und dem Axiallagerteil erreicht. Außerdem wird der Traganteil des Radiallagerteiles nicht beeinträchtigt und der Radiallagerteil besser ausgeformt. Die geschlossene Halteöffnung hat weiterhin den Vorteil, daß auch eine weitaus erhöhte Sicherheit in der Fixierung des Axiallagerteiles in axialer Richtung gewährleistet wird. Bei der Ausbildung der Haltenasen ist erfindungsgemäß ein Abstand von jeder Haltenase zu dem von ihr übergriffenen Innenflächenteil des Radiallagerteiles gebildet, wodurch sichergestellt ist, daß die Verbindung am Radiallagerteil sicher aber ausreichend beweglich ist, um allen Erfordernissen bei der Montage des Lagers, bei der Anpassung des Lagers an die Lageraufnahme im Lagergehäuse und im Betrieb des Lagers gerecht zu werden.

In bevorzugter Ausführungsform der Erfindung weist die Befestigungslasche in zusammengesetztem Zustand des Radial-Axial-Gleitlagers mittig mindestens eine Vertiefung auf, von der sich beidseitig zwei das Radiallagerteil im Bereich der Halteöffnung übergreifende Haltenasen erstrecken. Dabei kann die nach innen weisende Befestigungslasche des Axiallagerteiles zunächst im wesentlichen rechteckige Gestalt aufweisen, so daß die mittige Vertiefung bei der Bildung der Nasen eingeformt wird. Die Befestigungslasche kann aber auch mit mittiger Vertiefung vorgebildet sein.

Außer dieser Befestigungslasche können noch Führungslaschen, vorzugsweise zwei Führungslaschen, vorgesehen sein. Wenn der Winkelabstand dieser Führungslaschen zur Befestigungslasche nur bis zu 30° beträgt, können die Führungslaschen unter Ausnutzung des vorgesehenen Spiels ebenfalls in Halteöffnungen greifen, die am Umfangsrand des Radiallagerteiles vorgesehen sind. Bei größerem Winkelabstand der Führungslaschen von der Befestigungslasche wird man am Umfangsrand des Radiallagerteiles axial offene Einbuchtungen vorsehen, in die die Führungslaschen eingeführt werden, wenn das Radiallagerteil nach Einsetzen der Befestigungslasche in die Halteöffnung seitlich an das Radiallagerteil angeklappt wird.

Zur Herstellung des zusammengesetzten Axial-Radial-Gleitlagerteils werden, gemäß dem Verfahren nach Anspruch 7, zunächst das Radiallagerteil und das Axiallagerteil gefertigt, wobei das Axiallagerteil mindestens eine im wesentlichen rechteckige, radial einwärts ragende Haltelasche als Befestigungslasche erhält. Als ein Bearbeitungsschritt am Radiallagerteil wird am Umfangsrandbereich mindestens eine Halteöffnung für die Befestigungslasche ausgestanzt. Für die Führungslaschen werden je nach ihrer Lage bezüglich der Befestigungslasche entweder axial geschlossene Halteöffnungen oder axial offene Einbuchtungen am Radiallagerteil ausgestanzt. Zum Zusammensetzen von Axiallagerteil und Radiallagerteil wird die Befestigungslasche des Axiallagerteiles in die dafür vorgesehene Halteöffnung am Radiallagerteil eingeführt. Die Führungslaschen des Axiallagerteiles werden bei enger Anordnung zur Befestigungslasche gleichzeitig mit der Befestigungslasche in die Halteöffnungen eingeführt. Bei Anordnung der Führungslaschen im größeren Winkelabstand von der Befestigungslasche wird nach dem Einführen der Befestigungslasche in die für sie vorgesehene Halteöffnung der Axiallagerteil an den Umfangsrand des Radiallagerteiles angeschwenkt, wobei die Führungslaschen in die für sie vorgesehenen Einbuchtungen eingeführt werden. Nachdem das Axiallagerteil auf diese Weise an das Radiallagerteil angesetzt worden ist, werden an der Befestigungslasche des Axiallagerteiles mittels eines speziell ausgebildeten Preßstempels Haltenasen angepreßt, derart, daß diese Haltenasen über einen der Halteöffnung benachbarten Bereich der Innenfläche am Radiallagerteil greifen aber Abstand von dieser Innenfläche behalten.

Diese Aufweitung kann durch Anbringen mindestens einer Kerbe in dem nach innen weisenden Rand der Befestigungslasche bewerkstelligt oder vorbereitet werden. Diese Kerbe bietet den Vorteil, daß an der Befestigungslasche für die Bildung der Befestigungsnasen ausreichendes Material vorgesehen werden kann, ohne Gefahr, daß die Befestigungslasche in den Bewegungsbereich des Lagerzapfens ragen könnte.

Das erfindungsgemäß ausgebildete, zusamengesetzte Radial-Axial-Gleitlager und seine Herstellungsweise bieten den Vorteil, daß das Radiallagerteil beim Zusammenbau weder zusammengedrückt noch aufgeweitet werden muß, daß der Zusammenbau in einfacher Weise durchführbar ist und keinerlei Gefahr besteht, daß beim Zusammenbau irgendwelche Beschädigungen an dem einen oder anderen Lagerteil vorkommen können. Schließlich bietet sich der Vorteil, daß sicheres Zusammehalten, eine gute Beweglichkeit zwischen Axiallagerteil und Radiallagerteil beibehalten bleibt.

Beispielhafte Ausführungsformen der Erfindung werden nachfolgend anhand der Zeichnungen näher erläutert.

Es zeigen:
- Figur 1: eine perspektivische Darstellung des zusammengesetzten Radial-Axial-Gleitlagers einer ersten Ausführungsform;
- Figur 2: die Draufsicht auf ein Axiallagerteil gemäß Figur 1 vor dem Zusammenbau;
- Figur 3: eine Draufsicht auf ein Axiallagerteil gemäß Figur 1 in zusammengebautem Zustand mit einem Radiallagerteil;
- Figur 4: eine Ansicht auf ein abgewickeltes Radiallagerteil gemäß Figur 1;
- Figur 5: einen Schnitt durch das Radiallagerteil längs der Linie V-V der in Fiur 4 gezeigten Darstellung;
- Figur 6: einen Ausschnitt VI aus Figur 3;
- Figur 7: eine perspektivische Darstellug des zusammengesetzten Radial-Axial-Gleitlagers in einer zweiten Ausführungsform;
- Figur 8: die Draufsicht auf ein Axiallagerteil gemäß Figur 7 vor dem Zusammenbau;
- Figur 9: eine Draufsicht auf ein Axiallagerteil nach Figur 7 in zusammengebautem Zustand mit einem Radiallagerteil;
- Figur 10: eine Ansicht auf ein abgewickeltes Radiallagerteil gemäß Figur 7;
- Figur 11: einen Schnitt durch das Radiallagerteil gemäß Figur 10 längs der Linie XI-XI und
- Figur 12: einen Schnitt durch das Radiallagerteil nach Figur 10 längs der Linie XII-XII der Figur 1O.

Bei den in den Zeichnungen wiedergegebenen Zeichnungen handelt es sich um Radial-Axial-Gleitlager 1, deren Radiallagerteil 3 in Form einer im wesentlichen halbzylindrischen Lagerschalen ausgebildet ist. Der Axiallagerteil 2 ist gebildet durch eine einseitig oder beidseitig an den bogenförmigen Stirnrand des Radiallagerteiles angesetzte, halbringförmige Anlaufscheibe.

Das Axiallagerteil 2 besitzt an seinem inneren Umfangsrand nach innen weisende Haltelaschen 4 und Führungslaschen 5a, 5b.

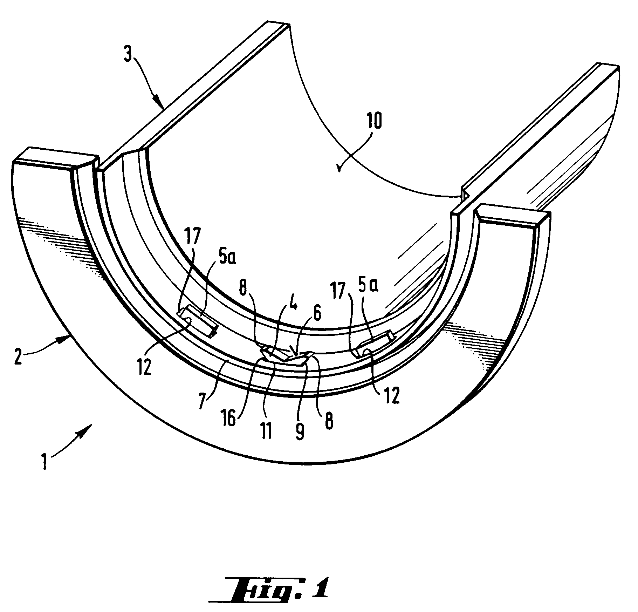

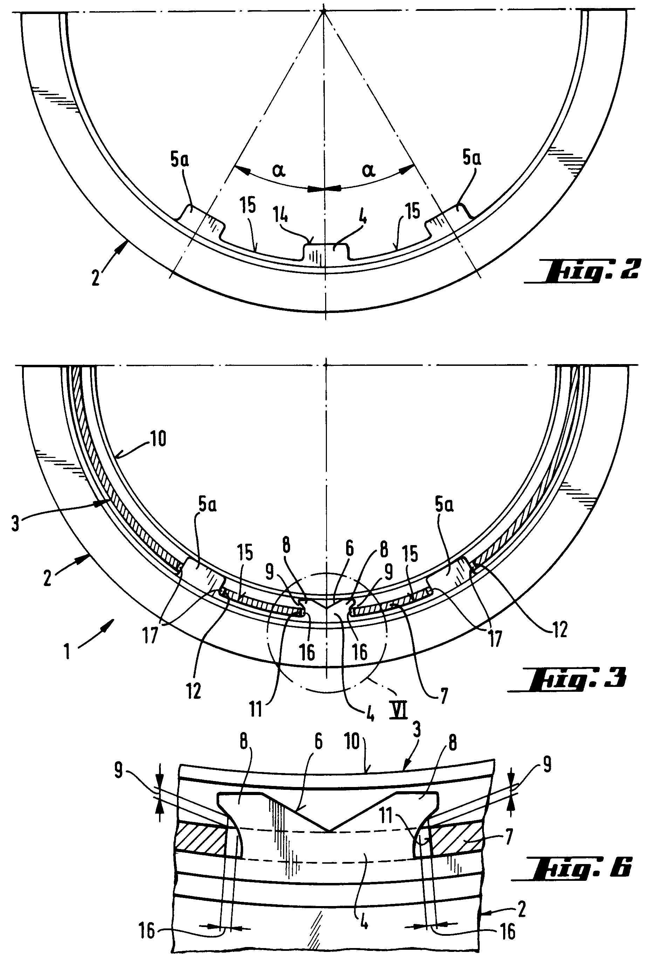

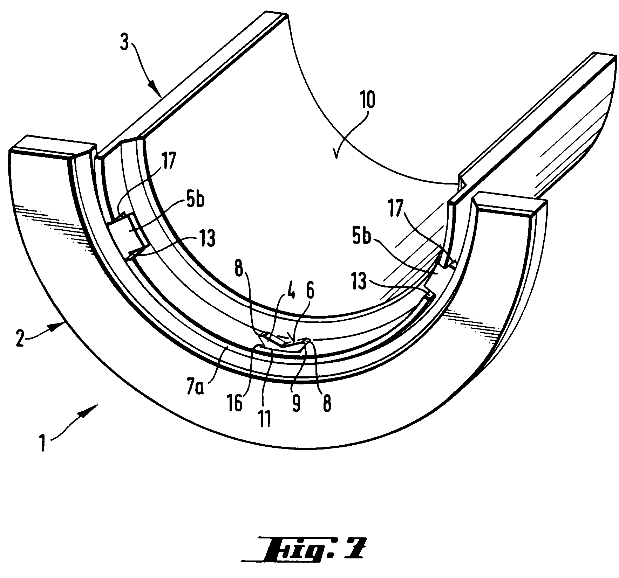

Im Beispiel der Figuren 1 bis 6 ist das Axiallagerteil 2 mit einer mittigen Befestigungslasche 4 und dazu flankierend in einem Winkelabstand α von etwa 30° mit zwei Führungslaschen 5a versehen. Zwischen der mittigen Befestigungslasche 4 und den flankierenden Führungslaschen 5a ist ein gegenüber dem Innenumfang des Axiallagerteiles 2 vorstehender Widerlagerrand 15 gebildet. Die Befestigungslasche 4 und die beiden flankierenden Führungslaschen 5a greifen in Halteöffnungen 11 und 12 am Rand 7 des Radiallagerteiles. Um das Zusammenstecken des Radiallagerteiles 3 und des Axiallagerteiles 2 zu ermöglichen, weisen die Halteöffnungen 11 und 12 in Umfangsrichtung des Radiallagerteiles 3 etwas vergrößerte Länge gegenüber der umfänglichen Länge der Befestigungslasche 4 und Führungslaschen 5 auf, so daß sich - wie die Figuren 3 und 6 zeigen - ein umfängliches Spiel 16 der Haltelasche 4 in der Halteöffnung 11 und der Führungslaschen 5a in den Halteöffnungen 12 ergibt. Trotz der anfänglich im wesentlichen rechteckigen Gestalt der Befestigungslasche 4 und der bleibenden, im wesentlichen rechteckigen Gestalt der Führungslaschen 5a läßt sich die Anordnung von Haltelasche 4 und flankierenden Führungslaschen 5a bei einem gegenseitigen Winkelabstand α von bis ca. 30° noch aufgrund dieses Spieles in die Anordnung der Halteöffnungen 11 und 12 einführen. Nachdem die Befestigungslasche 4 und die Haltelaschen 5a bis zur Anlage des Widerlagerrandes 15 in die Halteöffnungen 11 und 12 eingeführt worden sind, wird die Befestigungslasche 4 an ihrem nach innen weisenden Rand 14 mit einer mittigen, auswärts gerichteten Vertiefung 6 versehen und von dieser Vertiefung 6 aus das Material der Befestigungslasche auswärts verdrängt, so daß sich Haltenasen 8 bilden, die über die Endkanten der Halteöffnung 11 in Umfangsrichtung hinausgreifen. Die Verformung wird jedoch nur so weit geführt, daß die Haltenasen 8 einen Abstand 9 von der Innenfläche des Randbereiches 7 am Radiallagerteil 3 behalten. Dieser Abstand 9 sichert zusammen mit dem Spiel 16 der Befestigungslasche 4 in der Halteöffnung 11 und dem eventuell etwas größerem Spiel 17 der Führungslaschen 5a in den Halteöffnungen 12 bei sicherer Anbringung ausreichende Beweglichkeit des Axiallagerteiles 2 am Radiallagerteil 3.

Während in Figur 1 nur ein einseitig angesetztes Axiallagerteil 2 an einem Radiallagerteil 3 zeigt, können in entsprechender Weise zu beiden Stirnseiten des Radiallagerteiles 3 je ein Axiallagerteil oder ein Satz von Axiallagerteilen 2 angesetzt sein.

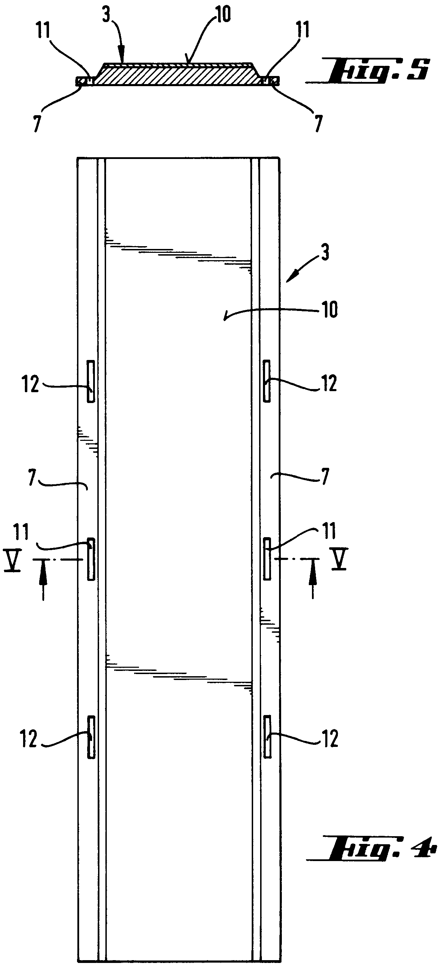

Hierzu zeigen die Figuren 4 und 5 die Anbringung von rechteckigen Halteöffnungen 11 und 12 an beiden stirnseitigen Randbereichen 7 eines Radiallagerteiles 3.

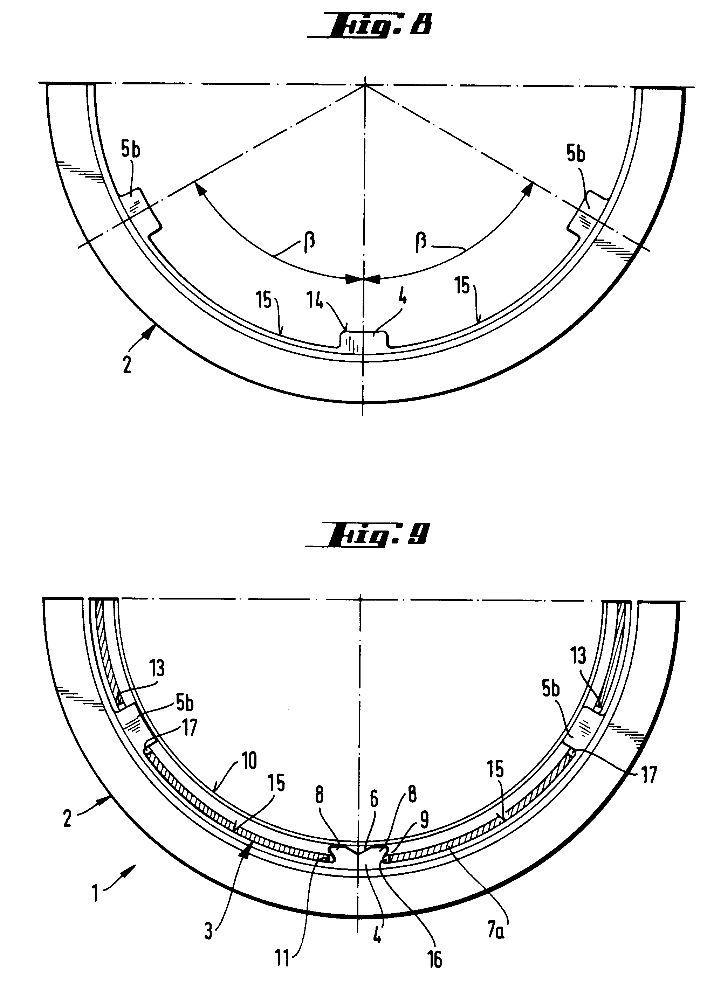

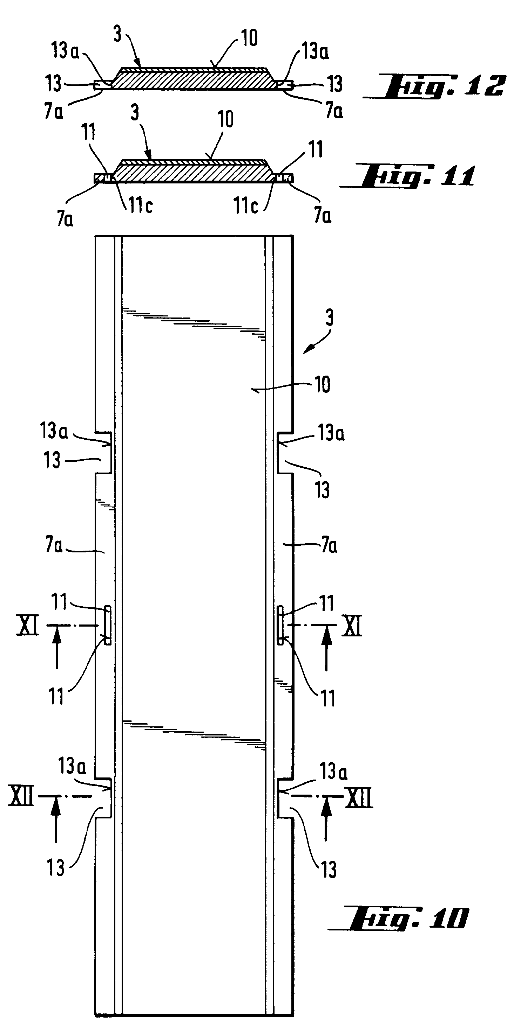

Im Beispiel der Figuren 7 bis 12 ist wiederum jedes Axiallagerteil 2 mittels einer Befestigungslasche 4 und zweier flankierender Führungslaschen 5b am Randbereich 7 des Radiallagerteiles gehalten. Hierdurch ist die Anordnung der Führungslaschen 5b dahingehend gegenüber dem Ausführungsbeispiel nach Figur 1 bis 6 abgewandelt, das die Führungslaschen 5b in einem Winkelabstand β von der mittigen Befestigungslasche 4 angeordnet sind, der größer als 30° ist. Diese Anordnung bietet den Vorteil, daß die Axiallagerteile 2 gegen radiales Abfallen vom Radiallagerteil 2 auch dann noch gesichert sind, wenn die Haltenasen 8 durch Verschleiß oder aus sonstigen Gründen wegfallen.

Um bei diesem Ausführungsbeispiel die Lagerteile, d.h. das Radiallagerteil 3 und die Axiallagerteile 2 zusammensetzen zu können, sind im Randbereich 7a bzw. den beiden Randbereichen 7a des Radiallagerteiles eine mittige Halteöffnung 11 und seitlich flankierende Einbuchtungen 13 dessen Grundkante 13a mit der Innenkante 11c der Halteöffnung 11 fluchtet, vorgesehen. Zwischen den Rändern der Halteöffnung 11 und den umfänglichen Endkanten der Befestigungslasche 4 sowie zwischen den umfänglichen Endkanten der Führungslaschen 5b und den Endkanten der Einbuchtungen 13 ist wieder ein Spiel 16 gebildet, das die Beweglichkeit des Axiallagerteiles 2 gegenüber dem Radiallagerteil 3 gewährleistet. Die Führungslaschen 5b haben ebenfalls umfängliches Spiel 17 in den Einbuchtungen 13, das demjenigen der Befestigungslasche 4 in der Halteöffnung 11 im wesentlichen gleich ist. Auch in diesem Ausführungsbeispiel erstreckt sich an der inneren Umfangskante des Axiallagerteiles 2 zwischen den Führungslaschen 5b und der Befestigungslasche 4 ein bogenförmiger Widerlagerrand 15.

Zum Zusammensetzen des Radial-Axial-Gleitlagers wird in diesem Beispiel die Befestigungslasche 4 des Axiallagerteiles 2 in die Halteöffnung 11 des Radiallagerteile in Schräglage des Axiallagerteiles 2 eingeführt, wozu auch ein gewisses Spiel zwischen den sich in Umfangsrichtung erstreckenden Kanten der Halteöffnung 11 zur Dicke der Befestigungslasche 4 vorgesehen wird. Nach Einführen der Befestigungslasche 4 in die Halteöffnung 11 bis zur Anlage des Widerlagerrandes 15 an der Außenfläche des Randbereiches 7 am Radiallagerteil 3 wird das Axiallagerteil 2 an die Stirnseite des Radiallagerteiles 2 angeschwenkt, wobei die Führungslaschen 5b in die axial offenen Einbuchtungen 13 eintreten. Sodann werden wie im Beispiel nach Figur 1 bis 6 die Haltenasen 8 an der Befestigungslasche 4 gebildet, so daß dann das Axiallagerteil 2 sicher am Radiallagerteil 3 gehalten ist, aber gewünschte Beweglichkeit gegenüber dem Radiallagerteil 3 aufweist.

In beiden Ausführungsformen der Erfindung ist die Bildung der mittigen Vertiefung 6 oder Kerbe von besonderem Vorteil, weil auf diese Weise die Befestigungslasche 4 an ihrem Rand 14 in sicherem radialem Abstand zur Gleitfläche 10 des Radiallagerteiles 3 gehalten ist.

### Bezugszeichenliste:

- 1: Radial-Axial-Gleitlager
- 2: Axiallagerteil
- 3: Radiallagerteil
- 4: Befestigungslasche
- 5a,5b: Führungslasche
- 6: Vertiefung, Kerbe
- 7: Randbereich an Radiallagerteil
- 7a: Rand
- 8: Haltenase
- 9: Abstand
- 10: Gleitfläche des Radiallagerteiles
- 11: geschlossene Halteöffnung
- 11c: Innenkante
- 12: geschlossene Halteöffnung
- 13: axial offene Einbuchtung
- 13a: Grundkante
- 14: Rand an Befestigungslasche
- 15: Widerlagerrand
- 16: Spiel
- 17: Spiel

## Patentansprüche

1. Zusammengesetzes Radial-Axial-Gleitlager (1) mit halbschalenförmigem oder buchsenförmigem Radiallagerteil (3) und einseitig oder beidseitig angesetztem teilringförmigem Axiallagerteil (2) oder einem Satz von teilringförmigen Axiallagerteilen, wobei jedes Axiallagerteil (2) eine Mehrzahl von in gegenseitigen Winkelabständen (α, β) nach innen vorstehenden Haltelaschen (4, 5) an seiner inneren Umfangskante aufweist, die in eine im Bereich des bogenförmigen oder kreisförmigen Randes (7, 7a) des Radiallagerteiles eingebrachte Ausnehmung (11, 12, 13) eingesetzt sind, wobei sämtliche Haltelaschen (4, 5) in der sie jeweils aufnehmenden Aufnehmung (11, 12, 13) Spiel in Umfangsrichtung und Spiel in Axialrichtung des Radiallagerteiles (3) haben,
dadurch gekennzeichnet, daß
für jedes Axiallagerteil (2) mindestens eine Ausnehmung am Umfangsrand des Radiallagerteiles (3) für eine als Befestigungslasche (4) dienende Haltelasche in Form einer geschlossenen Halteöffnung (11) gebildet ist, durch die die jeweilige Befestigungslasche (4) des Axiallagerteiles (2) gesteckt ist und das Radiallagerteil (3) übergreifende, angeformte Nasen (8) aufweist, wobei die Nasen (8) einen ein vorher festgelegtes radiales Spiel des Axiallagerteiles (2) gegenüber dem Radiallagerteil (3) bildenden Abstand (9) von dem von ihnen übergriffenen Innenflächenteil des Radiallagerteiles (3) haben.

2. Gleitlager nach Anspruch 1, dadurch gekennzeichnet, daß die Befestigungslasche (4) an ihrem radial nach innen weisenden Rand eine Vertiefung (6) aufweist, von der aus beidseitig zwei den Radiallagerteil (3) übergreifende Nasen (8) geformt sind.

3. Gleitlager nach Anspruch 1 oder 2, dadurch gekennzeichnet, daß zusätzlich zu der mit Haltenasen (8) versehenen Befestigungslasche (4) mindestens eine Führungslasche (5a, 5b) ohne Haltenasen vorgesehen ist.

4. Gleitlager nach Anspruch 3, gekennzeichnet durch die Anordnung von einer mittig angeordneten Befestigungslasche (4) mit angeformten Haltenasen (8) und zwei beidseitig zu dieser flankierend in einem Winkelabstand (α, β) angeordneten Führungslaschen (5a, 5b) ohne angeformte Haltenasen.

5. Gleitlager nach Anspruch 4, dadurch gekennzeichnet, daß die beiden flankierenden Führunglaschen (5a, 5b) in einem Winkelabstand (α) von bis zu 30° zur mittigen Befestigungslasche (4) angeordnet sind und mit ggf. vergrößertem Spiel in Umfangsrichtung in je eine geschlossene Halteöffnung (12) im Radiallagerteil (3) greifen.

6. Gleitlager nach Anspruch 4, dadurch gekennzeichnet, daß die beiden flankierenen Führungslaschen (5a, 5b) in einem Winkelabstand (β) von mehr als 30° zur mittigen Befestigungslasche (4) angeordnet sind und jeweils in eine axial nach außen offene Einbuchtung (13) am Rand des Radiallagerteiles (3) greifen, wobei die Grundkante (13a) dieser Einbuchtung (13) mit der axial inneren Kante (11c) der Halteöffnung (11) für die mittlere Befestigungslasche (4) ausgerichtet ist.

7. Verfahren zur Herstellung eines Radial-Axial-Gleitlagers (1) mit halbschalenförmigem oder buchsenförmigem Radiallagerteil (3) und einseitig oder beidseitig angesetztem, teilringförmigem Axiallagerteil (2) oder einem Satz von teilringförmigen Axiallagerteilen, bei welchem Verfahren das teilringförmige Axiallagerteil (2) mit am inneren Umfangsrand radial vorstehenden Haltelaschen (4, 5) und das Radiallagerteil an einer oder an beiden axialen Endkanten (7, 7a) mit Ausnehmungen (11, 12, 13) zur Aufnahme der Haltelaschen des Axiallagerteiles vorgefertigt werden,
dadurch gekennzeichnet, daß
der innere Umfangsrandbereich des Axiallagerteiles (2) mindestens eine im wesentlichen rechteckige, radial einwärts ragende Befestigungslasche (4) erhält und in einem axialen Randbereich (7, 7a) des Radiallagerteiles (3) mindestens eine rechteckige Halteöffnung (11) aus gestanzt wird,
daß das Axiallagerteil (2) und das Radiallagerteil (3) zusammengesetzt werden, wobei die Befestigungslasche (4) mit Spiel in die Umfangsrichtung und in Axialrichtung des Radiallagerteiles in die Halteöffnung (11) gesteckt wird und
daß dann die Befestigungslasche (4) aufgeweitet wird, so daß das verdrängte Material das Radiallagerteil (3) im Bereich der Halteöffnung (11) übergreift, wobei das verdrängte Material in Form mindestens einer Nase (8) ausgebildet und nur bis in einen dem gewünschten Spiel entsprechenden Abstand (9) von dem der Halteöffnung benachbarten Innenflächenbereich des Radiallagerteiles (3) geformt wird.

8. Verfahren nach Anspruch 7, dadurch gekennzeichnet, daß in dem nach innen weisenden Rand (14) der Befestigungslasche mindestens eine Kerbe (6) eingebracht wird.

9. Verfahren nach Anspruch 8, dadurch gekennzeichnet, daß das Einbringen der Kerbe (6) gleichzeitig mit der Ausbildung von das Radiallagerteil (3) übergreifenden Haltenasen (8) vorgenommen wird.

10. Verfahren nach Anspruch 8, dadurch gekennzeichnet, daß die Befestigungslasche (4) mit mindestens einer Kerbe (6) vorgefertigt und nach dem Einstecken der Befestigungslasche (4) in die Halteöffnung (11) die Kerbenränder unter Ausbildung von das Radiallagerteil (3) übergreifenden Haltenasen (8) abgeflacht werden.

11. Verfahren nach einem der Ansprüche 7 bis 10, dadurch gekennzeichnet, daß an die Innenumfangskante des Axiallagerteiles (2) zusätzlich zur Befestigungslasche (4) Führungslaschen (5a) in gegenseitigem Winkelabstand (α) von bis zu 30° zur Befestigungslasche (4) gebildet und im axialen Randbereich (7) des Radiallagerteiles (3) drei ringsum geschlossene Halteöffnungen (11, 12) entsprechender Anordnung, aber um ein gewünschtes Spiel (16, 17) größerer Abmessungen als die Führungslaschen (5a) eingestanzt werden, und daß die Befestigungslasche (4) und die Führungslaschen (5a) unter Ausnutzung des vorbereiteten Spiels (16, 17) unter gegenseitiger umfänglicher Bewegung von Radiallagerteil (3) und Axiallagerteil (2) in die Halteöffnungen (11, 12) eingeführt werden.

12. Verfahren nach einem der Ansprüche 7 bis 10, dadurch gekennzeichnet, daß an die Innenumfangskante des Axiallagerteiles (2) eine Befestigungslasche (4) und zwei flankierende Führungslaschen (5b) im gegenseitigen Winkelabstand (β) von mehr als 30° von der Befestigungslasche (4) gebildet und im axialen Randbereich (7a) des Radiallagerteiles (3) eine geschlossene Halteöffnung (11), vorzugsweise die Scheitelbereich, größerer Abmessung als die Befestigungslasche (4) und zu beiden Seiten davon in axialer Richtung offene Einbuchtungen (13) nur geringfügig größerer Abmessungen als die Führungslaschen (5b) eingestanzt werden und daß das Axiallagerteil (2) in Schräglage mit der mittleren Befestigungslasche (4) in die Halteöffnung (11) eingesteckt und dann unter Einführen der äußeren Führungslaschen (5b) in die Einbuchtungen (13) an den axialen Rand (7a) des Radiallagerteiles (3) herangeschwenkt wird.

## Claims

1. Compound journal and thrust plain bearing (1) comprising a half-liner-shaped or bush-shaped journal bearing part (3) and a part-ring-shaped thrust bearing part (2) or a set of part-ring-shaped thrust bearing parts attached at one or both ends thereof, while every thrust bearing part (2) comprises on its inner peripheral rim a plurality of inwardly extending retaining projections (4,5) which are angularly spaced (α,β) from each other and which are inserted into a recess (11,12,13) provided in the region of the arcuate or circular margin (7,7a) of the journal bearing part, while all retaining projections (4,5) have in the recess (11,12,13) which receives them a clearance in peripheral direction and a clearance in axial direction of the journal bearing part (3),
characterised in that
for every thrust bearing part (2) at least one recess in the form of an enclosed retaining opening (11) is provided in the peripheral rim of the journal bearing part (3) for a retaining projection serving as a fixing projection (4), through which recess extends the relevant fixing projection (4) of the thrust bearing part (2) which is provided with noses (8) formed thereon and extending over the journal bearing part (3), wherein the noses (8) are spaced a distance (9), forming a predetermined radial clearance of the thrust bearing part (2) with respect to the journal bearing part (3), from the portion of the inner surface of the journal bearing part (3) over which they extend.

2. Plain bearing according to claim 1, characterised in that the fixing projection (4) has on its radially inwardly facing rim a recess (6) from which are formed to both sides two noses (8) extending over the journal bearing part (3).

3. Plain bearing according to claim 1 or 2, characterised in that at least one guiding projection (5a,5b) without retaining noses is provided in addition to the fixing projection (4) with retaining noses (8).

4. Plain bearing according to claim 3, characterised by the arrangement of a centrally situated fixing projection (4) with retaining noses (8) formed thereon and two guiding projections (5a,5b) without retaining noses flanking the fixing projection on both sides at an angular distance (α, β).

5. Plain bearing according to claim 4, characterised in that the two flanking guiding projections (5a,5b) are arranged at an angular distance (α) of up to 30° with respect to the central fixing projection (4) and engage each, possibly with an increased clearance in peripheral direction, in an enclosed retaining opening (12) in the journal bearing part (3).

6. Plain bearing according to claim 4, characterised in that the two flanking guiding projections (5a,5b) are arranged with respect to the central fixing projection (4) with an angular distance (β) of more than 30° and engage each into an axially outwardly open cut-out (13) on the rim of the journal bearing part (3) while the base edge (13a) of this cut-out (13) is aligned with the axially inner edge (llc) of the retaining opening (11) for the central fixing projection (4).

7. A method for the manufacture of a journal and thrust plain bearing (1) comprising a half-liner-shaped or bush-shaped journal bearing part (3) and a part-ring-shaped thrust bearing part (2) or a set of part-ring-shaped thrust bearing parts attached at one or both ends thereof, in which method the part-ring-shaped thrust bearing part (2) has been made with retaining projections (4,5) extending radially on the inner peripheral rim, and the journal bearing part has been made on one or both axial end rims (7,7a) with recesses (11,12,13) for the admission of retaining projections of the thrust bearing part,
characterised in that
the inner peripheral rim region of the thrust bearing part (2) comprises at least one substantially rectangular, radially inwardly extending fixing projection (4) and at least one rectangular retaining opening (11) is stamped-out in an axial rim region of the journal bearing part,
that the thrust bearing part (2) and the journal bearing part (3) are assemble while the fixing projection (4) is inserted in the retaining opening (11) with a clearance in peripheral direction and axial direction of the journal bearing part, and
that the fixing projection (4) is then widened so that the displaced material extends over the journal bearing part (3) in the region of the retaining opening (11) while the displaced material is shaped in the form of at least one nose (8) and is formed only to a distance (9) corresponding to the desired clearance, from the portion of the inner surface of the journal bearing part (3) adjacent the retaining opening.

8. A method according to claim 7, characterised in that at least one notch (6) is made in the inwardly facing rim (14) of the fixing projection.

9. A method according to claim 8, characterised in that the notch (6) is made simultaneously with the formation of the retaining noses extending over the journal bearing part (3).

10. A method according to claim 8, characterised in that the fixing projection (4) is initially made with at least one notch (6) and, after the insertion of the fixing projection (4) into the retaining opening (11), the edges of the notch are flattened while the retaining noses (8) extending over the journal bearing part (3) are made.

11. A method according to any one of claims 7 to 10, characterised in that, in addition to the fixing projection (4), guiding projections (5a) are formed on the inner peripheral rim of the thrust bearing part (2) in opposite angular distances (α) of up to 30° with respect to the fixing projection (4) and three fully enclosed retaining openings (11, 12) in corresponding arrangement but having dimensions by a desired clearance (16,17) greater than the dimensions of the guiding projections (5a) are stamped in the axial rim region (7) of the journal bearing part (3), and that the fixing projection (4) and the guiding projections (5a) are inserted in the retaining openings (11,12) while making use of the prepared clearance (16,17) by mutual peripheral movement of the journal bearing part (3) and thrust bearing part (2).

12. A method according to any one of claims 7 to 10, characterised in that a fixing projection (4) and two flanking guiding projections (5b) with opposite angular distances (β) of more than 30° from the fixing projection (4) are formed on the inner peripheral rim of the thrust bearing part (2) and an enclosed retaining opening (11) is stamped in the axial rim region (7a) of the journal bearing part (3), preferably in the top region, this being of a greater dimension than the fixing projection (4), and on both sides thereof are stamped cut-outs (13) which are open in axial direction and are only slightly greater than the guiding projections, and that the thrust bearing part (2) is in an inclined position inserted with the central fixing portion (4) into the retaining opening (11) and then is tilted while the outer guiding projections (5b) are inserted into the cut-outs (13) on the axial rim (7a) of the journal bearing part (3).

## Revendications

1. Palier lisse assemblé radial et axial (1) comprenant une partie (3) formant palier radial en forme de demi-coussinet ou en forme de manchon et une partie (2) formant palier axial en forme de partie de couronne qui est posée d'un côté ou des deux côtés de celle-ci, ou un jeu de parties formant palier axial en forme de parties de couronne, cependant que chaque partie (2) formant palier axial présente sur le bord de son pourtour intérieur une pluralité de pattes de retenue (4, 5) qui font saillie vers l'intérieur en présentant entre elles des distances angulaires (α, β) et qui sont introduites dans un évidement (11, 12, 13) ménagé dans la région du bord (7, 7a) en forme d'arc ou en forme de cercle de la partie formant palier radial, et que l'ensemble des pattes de retenue (4, 5) présente dans l'évidement (11, 12, 13) qui reçoit chacune d'elles un jeu dans la direction de la périphérie et un jeu dans la direction axiale de la partie (3) formant palier radial, caractérisé par le fait que, pour chaque partie (2) formant palier axial, au moins un évidement est ménagé dans le bord du pourtour de la partie (3) formant palier radial pour une patte de retenue servant de patte de fixation (4), cet évidement se présentant sous la forme d'une ouverture de retenue fermée (11) à travers laquelle est enfoncée la patte de fixation correspondante (4) de la partie (2) formant palier axial, patte dans laquelle sont formés des becs (8) qui s'étendent au-dessus de la partie (3) formant palier radial, cependant que les becs (8) présentent, par rapport à la partie de surface intérieure de la partie (3) formant palier radial au-dessus de laquelle ils s'étendent, une distance (9) qui forme un jeu radial fixé au préalable de la partie (2) formant palier axial par rapport à la partie (3) formant palier radial.

2. Palier lisse selon la revendication 1, caractérisé par le fait que la patte de fixation (4) présente, sur son bord dirigé vers l'intérieur dans le sens radial, un renfoncement (6) à partir duquel sont formés des deux côtés deux becs (8) qui s'étendent au-dessus de la partie (3) formant palier radial.

3. Palier lisse selon la revendication 1 ou 2, caractérisé par le fait qu'en plus des pattes de fixation (4) qui sont pourvues de becs de retenue (8), il est prévu au moins une patte de guidage (5a, 5b) sans becs de retenue.

4. Palier lisse selon la revendication 3, caractérisé par la disposition comprenant une patte de fixation (4) disposée au centre et pourvue de becs de retenue (8) formés sur elle, et deux pattes de guidage (5a, 5b) sans becs de retenue formés sur elles qui sont disposées en la flanquant des deux côtés à une distance (α, β).

5. Palier lisse selon la revendication 4, caractérisé par le fait que les deux pattes de guidage (5a, 5b) qui flanquent la patte de fixation centrale (4) sont disposées à une distance angulaire (α) de celle-ci allant jusqu'à 30°, et qu'elles pénètrent chacune dans une ouverture de retenue fermée (12) ménagée dans la partie (3) formant palier radial, le cas échéant avec un jeu plus important dans la direction de la périphérie.

6. Palier lisse selon la revendication 4, caractérisé par le fait que les deux pattes de guidage (5a, 5b) qui flanquent la patte de fixation centrale (4) sont disposées à une distance angulaire (β) de celle-ci qui est supérieure à 30°, et qu'elles pénètrent chacune dans une encoche (13) qui est ouverte vers l'extérieur dans le sens axial et qui est ménagée dans le bord de la partie (3) formant palier radial, cependant que le fond (13a) de cette encoche (13) est aligné sur le bord axialement intérieur (11c) de l'ouverture de retenue (11) qui est destinée à la patte de fixation centrale (4).

7. Procédé pour fabriquer un palier lisse radial et axial (1) comprenant une partie (3) formant palier radial en forme de demi-coussinet ou en forme de manchon et une partie (2) formant palier axial en forme de partie de couronne qui est posée d'un côté ou des deux côtés de celle-ci, ou un jeu de parties formant palier axial en forme de parties de couronne, procédé dans lequel on fabrique au préalable la partie (2) formant palier axial en forme de partie de couronne munie de pattes de retenue (4, 5) en saillie dans le sens radial sur le bord de son pourtour intérieur, et on fabrique au préalable la partie formant palier radial munie, sur un bord extrême dans le sens axial (7, 7a), ou sur les deux, d'évidements (11, 12, 13) qui sont destinés à recevoir les pattes de retenue de la partie formant palier axial, caractérisé par le fait que la région intérieure du bord du pourtour de la partie (2) formant palier axial reçoit au moins une patte de fixation (4), pour l'essentiel rectangulaire, qui fait saillie vers l'intérieur dans le sens radial, et que l'on forme par estampage au moins une ouverture de retenue rectangulaire (11) dans une région (7) du bord dans le sens axial de la partie (3) formant palier radial, par le fait que l'on assemble la partie (2) formant palier axial et la partie (3) formant palier radial, la patte de fixation (4) étant enfoncée dans l'ouverture de retenue (11) avec un jeu dans la direction de la périphérie de la partie formant palier radial et dans sa direction axiale, et par le fait que l'on élargit ensuite la patte de fixation (4), de sorte que la matière refoulée arrive au-dessus de la partie (3) formant palier radial dans la région de l'ouverture de retenue (11), cependant que la matière refoulée prend la forme d'au moins un bec (8) et que, par rapport à la région de la surface intérieure de la partie (3) formant palier radial qui est voisine de l'ouverture de retenue, elle est déformée seulement jusqu'à une distance (9) qui correspond au jeu souhaité.

8. Procédé selon la revendication 7, caractérisé par le fait qu'au moins une entaille (6) est ménagée dans le bord (14) de la patte de fixation qui est dirigé vers l'intérieur.

9. Procédé selon la revendication 8, caractérisé par le fait que l'entaille (6) est ménagée en même temps que la formation des becs de retenue (8) qui arrivent au-dessus de la partie (3) formant palier radial.

10. Procédé selon la revendication 8, caractérisé par le fait que l'on fabrique au préalable la patte de fixation (4) munie d'au moins une entaille (6), et qu'après l'enfoncement de la patte de fixation (4) dans l'ouverture de retenue (11), on aplatit les bords de l'entaille en formant des becs de retenue (8) qui arrivent au-dessus de la partie (3) formant palier radial.

11. Procédé selon l'une des revendications 7 à 10, caractérisé par le fait qu'en plus de la patte de fixation (4), on forme sur le bord du pourtour intérieur de la partie (2) formant palier axial des pattes de guidage (5a) dont la distance angulaire (α) par rapport à la patte de fixation (4) va jusqu'à 30°, et que l'on estampe, dans la région (7) du bord axial de la partie (3) formant palier radial, trois ouvertures de retenue (11, 12) qui sont fermées de tous les côtés, qui sont disposées en conséquence, mais dont les dimensions sont supérieures d'un jeu souhaité (16, 17) à celles des pattes de guidage (5a), et par le fait que l'on introduit la patte de fixation (4) et les pattes de guidage (5a) dans les ouvertures de retenue (11, 12) en utilisant le jeu (16, 17) qui a été préparé et en déplaçant la partie (2) formant palier axial et la partie (3) formant palier radial l'une par rapport à l'autre dans la direction de leur pourtour.

12. Procédé selon l'une des revendications 7 à 10, caractérisé par le fait que l'on forme sur le bord du pourtour intérieur de la partie (2) formant palier axial une patte de fixation (4) et deux pattes de guidage (5b) qui flanquent la patte de fixation (4) à une distance angulaire entre elles (β) supérieure à 30°, et que l'on estampe dans la région axiale (7) du bord de la partie (3) formant palier radial une ouverture de retenue fermée (11) qui est ménagée de préférence dans la région du sommet et dont les dimensions sont supérieures à celles de la patte de fixation (4) et, des deux côtés de celle-ci, des encoches (13) qui sont ouvertes dans la direction axiale et dont les dimensions ne sont que légèrement supérieures a celles des pattes de guidage (5b), et par le fait que l'on enfonce la partie (2) formant palier axial en position oblique dans l'ouverture de retenue (11) par sa patte de fixation centrale (4), et qu'on la fait pivoter vers le bord axial (7a) de la partie (3) formant palier radial en introduisant les pattes de guidage extérieures (5b) dans les encoches (13).
